# EUROPEAN PATENT APPLICATION

(11) **EP 4 261 030 A1**
(43) Date of publication of application: **18.10.2023**
(21) Application number: 22209221.5
(22) Date of filing: 23.11.2022
(51) Int. Cl.: B32B 1/00, B32B 5/20, B32B 7/12, B32B 27/18, B32B 27/22, B32B 27/30, C08K 5/00, B32B 5/02

(54) **MULTI-LAYERED PVC MATERIAL, METHOD OF OBTAINING AND USES THEREOF**

(30) Priority: 14.04.2022 PT 2022117912
(71) Applicant: TMG Tecidos Plastificados e Outros Revestimentos Para A Industria Automovel SA, 4770-590 Vila Nova de Famalicão - São Cosme Vale (PT)
(72) Inventor: ROQUE MARCENEIRO, SOFIA DANIELA, 4805-298 PONTE (PT); GONCALVES LOBO, IRENE, 4805-298 PONTE (PT); DA SILVA DOS SANTOS, PAULO MIGUEL, 4805-298 PONTE (PT)
(74) Representative: Patentree

(57) **Abstract**

The present disclosure relates to a flexible multi-layered material comprising: a plurality of poly(vinyl chloride) - PVC - layers; wherein at least one of the plurality of PVC layers is a foam layer; wherein each of the layers of the plurality of PVC layers comprises up to 60% (w/w) of a phthalate-free plasticizer; and wherein the phthalate-free plasticizer is selected from a list consisting of: phosphate, trimelitate, adipate, citrate, sebacate, polyester, vegetable oil, and mixtures thereof; and wherein the solubility of the phthalate-free plasticizer in the PVC is at least 13 (J.cm-³)^{1/2}.

## Description

### TECHNICAL FIELD

The present disclosure relates to an eco-friendly and sustainable multi-layered polyvinyl chloride-based (PVC-based) material, comprising bioplasticizers and recycled fibers. The multi-layered PVC-based material may be used in the automotive industry, namely in car upholstery such as door panels, seats, interior trims, among others.

### BACKGROUND

Nowadays, sustainability is the main driven force in automotive industry. Well-known and emerging technologies, processes, and designs will coexist in a way that the market and therefore the demand side dictates. Thus, it is inevitable for original equipment manufacturers (OEMs) to integrate the concept of sustainability in the production of automobiles, through improvement of existing production processes or development of more sustainable products.

The automotive industry is constantly facing new challenges in terms of environmental concerns and sustainability. The increase in automobile production and the accelerated consumption of non-renewable natural resources have negative implications for the environment. Thus, it is inevitable for OEMs to integrate the concept of sustainability in automobiles production, through the improvement of existing production processes or development of more ecological products.

Poly(vinyl chloride), PVC, is a thermoplastic widely consumed in the automotive industry, as it has low costs and high versatility, representing 16 % of the total plastics used in a car. Considering the problems of petroleum resources, the production of PVC from renewable raw materials becomes crucial for OEMs. Therefore, there is a growing awareness regarding the selection of more sustainable raw materials for the development of PVC-based materials for car interiors, with less environmental impact.

The most used plasticizers in formulations with PVC resins are phthalates, due to their high efficiency in plasticizing PVC. However, low molecular weight (LMW) phthalates demonstrate several toxicity problems. According to Registration, Evaluation, Authorization of CHemicals (REACH), LMW phthalate plasticizers are classified as substances of high concern. The alternatives to these plasticizers are high molecular weight (HMW) phthalates, which are the plasticizers more used in the automotive industry. In the HMW phthalates class, the most consumed are plasticizers with alkyl chains from C9 to C13, such as di-isononyl phthalate (DINP), di-isodecyl phthalate (DIDP), among others. Although HMW phthalate plasticizers have no toxicity issues, there is market pressure to find alternatives to phthalates due to the bad reputation of LMW phthalates.

Thus, there is a growing interest in bioplasticizers and phthalate-free plasticizers at an industrial level. Bioplasticizers, or plasticizers of biological origin, are obtained from renewable sources. These are less likely to be toxic and harmful to health and can be biodegradable and recyclable. Phthalate-free plasticizers are plasticizers with molecular structures very similar to phthalates, but do not contain the aliphatic chains in the ortho position, a position that enhances the toxicity of phthalates. Alternative plasticizers to phthalates can be from different families: phosphates, trimellitates, adipates, citrates, sebacates, polyesters, vegetable oils, among others.

Plasticizers that have a good compatibility with the polymer are much less prone to migrate when the polymeric material comes into contact with liquids or other polymeric materials. From a theoretical consideration, compatibility is regarded as the miscibility on a molecular scale and the resistance to migration can be inferred through solubility parameters.

Typically, PVC materials for use in automobile interiors consist of several layers, produced by the process of coating pastes (plastisols). One of these layers is usually a foam, prepared by using blowing agents such as azodicarbonamide (ADCA). ADCA is the most widely used chemical blowing agent worldwide in the production of polymeric foams. However, in 2012, under the REACH regulation, ADCA was identified as a very high-risk substance (Substance of Very High Concern - SVHC) by evidence of harmful effects on human health. For this reason, this substance was included in the list of potential substances for inclusion in Annex XIV - REACH Authorization List, boosting the discussion and search for more sustainable and less harmful alternatives for human health, such as expandable microspheres or sodium bicarbonate-based blowing agents.

The use of sustainable materials presents a positive challenge, giving a new meaning to automotive interior design. As the focus on sustainability becomes more significant, the demand for sustainable textile fibers with a low impact on the environment has been increasing and becoming essential for knitwear producers. The fibers innovation and sustainability, from plant-based or animal-based fibers to more ecological synthetics fibers, is essential to find and integrate proposals that reduce the textiles environmental impact. Thus, an emerging trend is the use of single-component and recycled fabrics as a major contribution to circular economy. For example, polyethylene terephthalate (PET), one of the most used polymers in packaging worldwide, occupies a considerable amount of space in nature as waste and needs to be recycled for reuse. In this sense, recycling allows the conservation of raw materials, the reduction of the use of energy to produce virgin PET, and the reduction of greenhouse gas emissions. The ecological products obtained by recycling PET, namely wastes from terrestrial or ocean PET bottles, used as textile fibers, contribute to the development of more sustainable recycled textiles for application in automotive artificial leather.

Document EP2357080 describes a multi-layer with at least one layer of textile support and at least a layer of PVC comprising an emollient, wherein the emollient is a mixture of at least one epoxidized vegetable oil and at least one epoxidized fatty acid ester.

Document EP2357276 describes a multi-layer sheet material, comprising at least one textile carrier layer, at least one foamed layer of polyvinyl chloride containing plasticizer, and at least one outwardly facing layer of varnish on the cover layer, wherein at least 50% by weight of the polyvinyl chloride content in the outer layer is based on a polyvinyl chloride which has been produced by the suspension polymerization process (SPVC), and the composition for the outer layer comprises a calcium hydroxide stabilizer and/or a Ca/Zn stabilizer which comprises from 1 to 3% by weight of calcium and from 1 to 2% by weight of zinc.

These facts are disclosed in order to illustrate the technical problem addressed by the present disclosure.

### GENERAL DESCRIPTION

An aspect of the present disclosure relates to sustainable PVC-based materials for interior trims, preferably car interior trims, using raw materials (PVCs, plasticizers, blowing agents, among others) with low life-cycle assessment (LCA) and/or from biological origin. Surprisingly, the incorporation of the phthalate-free plasticizer substantially favors the flammability characteristic since the synergy between the phthalate-free based selected plasticizer in the multilayer material of the present disclosure decreases more than 20 mm/min in comparison with the standard material.

The present disclosure relates to a flexible multi-layered material comprising: a plurality of poly(vinyl chloride) - PVC - layers; wherein at least one of the plurality of PVC layers is a foam layer; wherein each of the layers of the plurality of PVC layers comprises up to 60% (w/w) of a phthalate-free plasticizer; and wherein the phthalate-free plasticizer is selected from a list consisting of: phosphate, trimelitate, adipate, citrate, sebacate, polyester, vegetable oil, or mixtures thereof; and wherein the solubility of the phthalate-free plasticizer in the PVC is at least 13 (J.cm⁻³)^{1/2}.

In an embodiment, the solubility of the phthalate-free plasticizer in the PVC is at least 14 (J.cm-³)^{1/2}; more preferably 15 (J.cm⁻³)^{1/2}.

In an embodiment, the phthalate-free plasticizer is selected from a list consisting of citrate, trimelitate, vegetable oil or mixtures thereof; preferably trimelitate, vegetable oil or mixtures thereof. In an embodiment the vegetable oil is an epoxidized vegetable oil.

In an embodiment, the vegetable oil is a castor oil derivative.

In an embodiment, the phthalate-free plasticizer is an acetylated form of triethyl citrate, castor oil derivative, or mixtures thereof.

In an embodiment, the phthalate-free plasticizer is of biological origin.

In an embodiment, at least one of the plurality of PVC layers is a compact PVC layer.

For the scope an interpretation of the present disclosure, a "PVC foam layer" refers to a porous PVC layer comprising a foaming agent, such as chemical and/or physical blowing agent, or microspheres; and a "compact PVC layer" refers to a PVC layer prepared without foaming agents.

In an embodiment, the grammage of the PVC compact layer ranges from 200 to 400 g/m², preferably 250 to 350 g/m².

In an embodiment, the grammage of the PVC foam layer ranges from 120 to 350 g/m², preferably 140 to 185 g/m².

In an embodiment, the density of the PVC compact layer ranges from 1100 to 1300 kg/m³.

In an embodiment, the density of the PVC foam layer ranges from 500 to 1050 kg/m³, preferably from 600 to 1000 kg/m³.

In an embodiment, the flexible multi-layered material further comprises an adhesive layer, a support layer, a lacquer layer, or combinations thereof.

In an embodiment, the lacquer layer is an external layer over the plurality of PVC layers.

In an embodiment, the support layer comprises textile, knitted fabric, spacer fabric, woven, natural fibers, or a combination of thereof.

In an embodiment, the adhesive layer is a PVC adhesive foam layer.

In an embodiment, the plurality of PVC layers comprises at least 60% (w/w) of PVC and up to 50% (w/w) of phthalate-free plasticizer; preferably 50-60% (w/w) of PVC and 40-50% (w/w) of phthalate-free plasticizer; more preferably up to 40% (w/w) of phthalate-free plasticizer.

In an embodiment, the at least one of the plurality of PVC layers further comprises an additive.

In an embodiment, the flexible multi-layered material comprises up to 10% (w/w) of the additive.

In an embodiment, the additive is selected from a list comprising: pigments, stabilizers, filers, auxiliary substances, UV stabilizers, fire-retardants, or mixtures thereof.

In an embodiment, the flexible multi-layered material comprises: a lacquer layer; a plurality of PVC layers consisting of a PVC compact layer, a PVC foam layer, and a PVC adhesive foam layer; and a support layer selected from the following list: fabric, knitted fabric, nonwoven, foam, or mixtures thereof; wherein each of the layers of the plurality of PVC layers comprises up to 60% (w/w) of a phthalate-free plasticizer selected from a list comprising: phosphate, trimelitate, adipate, citrate, sebacate, polyester, vegetable oil, or mixtures thereof.

In an embodiment, the lacquer layer is deposited on top of the plurality of PVC layers and on the most outward face of the multi-layered material.

The present disclosure also relates to an article comprising a flexible multi-layered material as described in any one of the previous claims.

In an embodiment, the article is an upholstery article, or a seat, or door panel, or automotive interior trim.

### BRIEF DESCRIPTION OF THE DRAWINGS

The following figures provide preferred embodiments for illustrating the description and should not be seen as limiting the scope of invention.
**Figure 1** **-** Embodiment of the flexible and fire-retardant multi-layered material comprising a lacquer layer, one PVC compact layer, one PVC foam layer, one PVC adhesive foam layer, and a support layer.
**Figure 2** - Embodiment of the flexible and fire-retardant multi-layered material comprising a lacquer layer, a first and a second PVC compact layer, a PVC adhesive foam layer, and a support layer.
**Figure 3** - Embodiment of the flexible and fire-retardant multi-layered material comprising a lacquer layer, a PVC compact layer, a PVC foam layer, a PVC adhesive compact layer, and a support layer.

### DETAILED DESCRIPTION

The present disclosure relates to a flexible multi-layered material comprising a plurality of poly(vinyl chloride) - PVC - layers, wherein at least one of the plurality of PVC layers is a foam layer; wherein each of the layers of the plurality of PVC layers comprises up to 60% (w/w) of a phthalate-free plasticizer, in particular a phthalate-free bioplasticizer, wherein the phthalate-free plasticizer is selected from a list consisting of: phosphate, trimelitate, adipate, citrate, sebacate, polyester, vegetable oil, or mixtures thereof; and wherein the solubility of the phthalate-free plasticizer in the PVC is at least 13 (J.cm⁻³)^{1/2}.

In an embodiment, the phthalate-free plasticizer is selected from a list consisting of citrate, trimelitate, vegetable oil or mixtures thereof. In a preferred embodiment the phthalate-free plasticizer is selected from a list consisting of trimelitate, vegetable oil or mixtures thereof.

For the scope an interpretation of the present disclosure, a "PVC foam layer" refers to a porous PVC layer comprising a foaming agent, such as chemical and/or physical blowing agent, or microspheres; and a "compact PVC layer" refers to a PVC layer prepared without foaming agents.

In an embodiment, the density of the compact PVC layer ranges from 1100 to 1300 kg/m³. In another embodiment, the density of the "PVC foam layer" ranges from 500 to 1050 kg/m³, preferably 600 to 1000 g/m³.

In an embodiment, the flexible multi-layered material, comprising one layer of compact PVC, one PVC foam layer, one PVC adhesive foam layer, and a support layer, was prepared using a phthalate-free plasticizer.

In an embodiment, the layers are produced through a coating process, with PVC (plastisol) fluid paste deposition, prepared beforehand, supported by silicone paper, in a continuous form. In a further embodiment, the multi-layered materials were prepared through layer-by-layer deposition of each of the layers using a knife coating technique.

In an embodiment, the multi-layered material was prepared through the sequential coating/enduction of each of the layers, wherein each of the PVC plastisol was cured before the deposition of the subsequent layer. In particular, the PVC compact layer was cured at a temperature between 188-204 °C, preferably 193-199 °C; and the PVC foam layer was cured at a temperature between 182-188 °C.

In an embodiment, the PVC foam layer, or PVC foamed layer, was produced by the incorporation of chemical and/or physical blowing agents or microspheres, preferably ADCA free. In a further embodiment, the PVC foam layer was produced by the incorporation of expandable microspheres or sodium bicarbonate-based blowing agents. In an embodiment, the density of the foam layer is less than 1050 kg/m³, preferably less than 800 kg/m³ and more preferably less than 700 kg/m³.

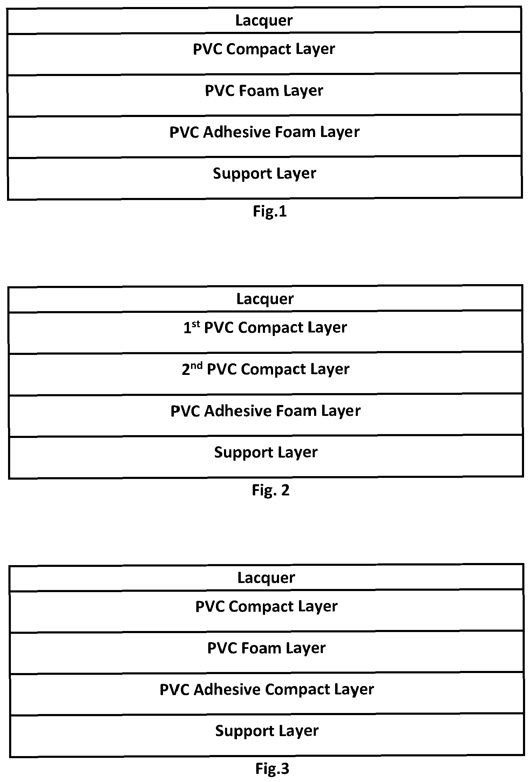

In an embodiment of the manufacturing stage of a multi-layered PVC manufacture, several sublayers can be used as, for example, the sublayers exemplified in Table 1 (Figure 1).

**Table 1: Embodiment of a composition of a flexible multi-layered material.**

| **Layer** | **Description** | **Quantity (g)** |
|---|---|---|
| Compact Layer | Phthalate-free Plasticizer (ex. castor oil derivative) | 50 |
| Grammage: 300 g/m² | | |
| | Stabilizer (ex: Ca/Zn based) | 4.8 |
| | Co-stabilizer (ex. Epoxidized vegetable oil, Epoxidized soybean oil) | 2 |
| | PVC | 60 |
| Foam | Phthalate-free Plasticizer (ex: castor oil derivative) | 51 |
| Grammage: 185 g/m² | | |
| | Stabilizer (ex: Ca/Zn based) | 2.25 |
| | Flame retardant (ex: Aluminum Trihydrate) | 10 |
| | PVC | 60 |
| | Filler (ex: calcium carbonate) | 8 |
| | ADCA-free blowing agent (ex: microspheres) | 1.8 |
| Adhesive foam | Phthalate-free Plasticizer (ex: castor oil derivative) | 47 |
| Grammage: 140 g/m² | | |
| | Stabilizer (ex: Ca/Zn based) | 2.25 |
| | Flame retardant (ex: Aluminum Trihydrate) | 17 |
| | PVC | 60 |
| | ADCA-free blowing agent (ex: microspheres) | 0.83 |
| Support Layer | Knitted fabric | - |

As comparative example, a multi-layered material was prepared using the same conditions listed in Table 1, but substituting the phthalate-free plasticizer by a standard phthalate-based plasticizer, such as high molecular weight phthalate (HWP) with 12>C>10.

In an embodiment, the multi-layered PVC-based material was composed by a lacquer layer, a PVC compact layer, a PVC foam layer, a PVC adhesive foam layer, and a textile substrate comprising a recycled textile, wherein the PVC layers comprise a phthalate-free plasticizer, in particular a vegetable oil-based bioplasticizer (Table 1).

In an embodiment, vegetable oils, preferably epoxidized vegetable oils, can also be used as co-stabilizers; in particular, vegetable oils in an amount lower that 10g per layer, preferably in an amount ranging between 1 and 5g per layer. In another embodiment, vegetable oils in an amount higher than 10g per layer are considered as plasticizers.

In an embodiment, the resulting multi-layered materials (with phthalate-free plasticizer or with a standard phthalate-based plasticizer) were analysed and characterized considering different properties, as listed in Table 2.

**Table 2: Characterisation of the multi-layered material comprising standard phthalate-based plasticizer (comparative example) or a vegetable oil-based bioplasticizer with the same layers.**

| **Specifications** | | **Preferable conditions** | **Standard- phthalate** | **Bioplasticizer - vegetable oil-based** |
|---|---|---|---|---|
| **Characteristic** | **Unit** | | | |
| Thickness ISO 5084 | mm | 1.0-1.2 | 1.12-1.14 | 1.01-1.07 |
| Weight ISO 2286-2:2016 | g/m² | 630-730 | 665-672 | 651-659 |
| Flammability (mm/min) Longitudinal (T) Latitudal (TR) FMVSS 302 | mm/min | <80 | T: 70.1-76.9 | T: 35.9-45.2 |
| | | | TR: 75.1-77.2 | TR: 42.3-44.4 |
| Flammability (mm/min) after ageing Longitudinal (T) Latitudal (TR) FMVSS 302 | mm/min | <80 | **336h at 70°C** | **336h at 70°C** |
| | | | T: 72.1-76.3 | T: 40.4-46 |
| | | | TR: 71.9-72.3 | TR: 45.2-47.3 |
| | | | **336h at 38°C 95%HR** | **336h at 38°C 95%HR** |
| | | | T: 76.1-78.5 | T: 39.3-47.1 |
| | | | TR: 75.2-76.5 | TR: 38.4-40.6 |
| Gravimetric Fogging DIN 75201-B:2011 (results from 2 different replicas) | mg | <1 | 0.23/0.37 | 0.08/0.12 |
| Resistance to wear Number of revolutions 4000 ISO 5470-1:2016 | - | 4 LIR | 4 | 4 |
| Mechanical properties - elongation at 50N Longitudinal (T) Latitudal (TR) DIN 53354:81 (results from 2 different replicas) | % | T | | |
| | | IL: 6 | | |
| | | SL: 20 | T: 9.9-11 | T: 11.9/14.8 |
| | | TR | TR: 16.2-16.9 | TR: 22.0/22.0 |
| | | IL: 10 | | |
| | | SL: 34 | | |
| Mechanical properties - elongation at 50N after aging Longitudinal (T) Latitudal (TR) DIN 53354:81 | % | Longit (T) | **1000h 75°C** | **1000h 75°C** |
| | | IL: 6 | T: 14.3 | T: 14.4 |
| | | SL: 20 | TR: 16.9 | TR: 23.2 |
| | | Latit (TR) | **1000h 70°C 55HR%** | **1000h 70°C 55HR%** |
| | | IL: 10 | T: 14.0 | T: 13.5 |
| | | SL: 34 | TR: 16.2 | TR: 18.6 |
| Mechanical properties - elongation at 100N Longitudinal (T) Latitudal (TR) DIN 53354:81 (results from 2 different replicas) | % | Longit (T) | | |
| | | IL : 15 | | |
| | | SL: 35 | T: 10.8/20.9- | T: 22.4/26.3- |
| | | Latit (TR) | TR: 51.0/53.6- | TR: 61.5/61.7 |
| | | IL : 35 | | |
| | | SL: 68 | | |
| Mechanical properties - elongation at 100N after aging Longitudinal (T) Latitudal (TR) DIN 53354:81 | % | Longit (T) | **1000h 75°C** | **1000h 75°C** |
| | | IL: 15 | T: 34.5 | T: 25.3 |
| | | SL: 35 | TR: 48.3 | TR: 58.6 |
| | | Latit (TR) | **1000h 70°C 55HR%** | **1000h 70°C 55HR%** |
| | | IL: 35 | T: 24.4 | T: 23.7 |
| | | SL: 68 | TR: 45 | TR: 44.8 |
| Brittleness in cold (-30°C) Longitudinal (T) Latitudal (TR) MBN 55555-4, Point 5.7:2019-10 | - | IL: OK | T: OK | T: OK |
| | | | TR: OK | TR: OK |
| Brittleness in cold (-30°C) after aging Longitudinal (T) Latitudal (TR) MBN 55555-4, Point 5.7:2019-10 | - | IL: OK | **1000h 75°C** | **1000h 75°C** |
| | | | T: OK | T: OK |
| | | | TR: OK | TR: OK |
| | | | **1000h 70°C 55HR%** | **1000h 70°C 55HR%** |
| | | | T: OK | T: OK |
| | | | TR: OK | TR: OK |
| Tearing strength Longitudinal (T) Latitudal (TR) ISSO 4674-1-B: 2016 | N | IL: 20 | T: 35-37 | T: 50-58 |
| | | | TR: 44-62 | TR: 34-37 |
| Short term heat test MBN 55555-3, Point 5.1:2019-11 at 90°C 700h | Grade | IL: 4 | 4.5 | 4.5 |
| Long term heat test MBN 55555-3, Point 5.1:2019-11 at 70°C-75°C 1000h | Grade | IL: 4 | 4.5 | 4.5 |
| Adhesion between surface and carrier fabric ISO 2411:2017 | N | LIR: 25 | T: 32.7-43.9 | T: 34.3-55.9 |
| | | | TR: 31.6-34 | TR: 32.7-51.2 |
| Dimensional stability in heat DIN 53377:2015 | % | IL: -3 SL: 3 | **18h at 90°C** | **18h at 90°C** |
| | | | Face | Face |
| | | | Long: -0.8 | Long: -1.3 |
| | | | Lat: 0 | Lat: 0 |
| | | | Back | Back |
| | | | Long: -0.8 | Long: -1.3 |
| | | | Lat: 0 | Lat: 0 |
| | | | **1000h at 75°C** | **1000h at 75°C** |
| | | | Face | Face |
| | | | Long: -1 | Long: -1.4 |
| | | | Lat: 0 | Lat: 0 |
| | | | Back | Back |
| | | | Long: -1 | Long: -1.4 |
| | | | Lat: 0 | Lat: 0 |
| Flexometer / Folding resistance ISO 32100:2018 (results from 3 different replicas) | Grade | SL: 1 | **150 000 cycles at 23°C** | **150 000 cycles at 23°C** |
| | | | T: 0/0/0 | T: 0/0/0 |
| | | | TR: 0/0/0 | TR: 0/0/0 |
| | | | **30 000 cycles at -20°C** | **30 000 cycles at -20°C** |
| | | | T: 1/1/1 | T: 0/0/0 |
| | | | TR : 1/1/1 | TR: 0/0/0 |
| | | | **50 000 cycles at -20°C** | **50 000 cycles at -20°C** |
| | | | T: 2/2/2 | T: 1/1/1 |
| | | | TR: 1/1/1 | TR: 0/0/0 |
| | | | **30 000 cycles after** | **30 000 cycles after 1000h** |
| | | | **1000h at 75°C** T: 0/0/0 | **at 75°C** T: 0/0/0 |
| | | | TR: 0/0/0 | TR: 0/0/0 |
| | | | **30 000 cycles after light fastness** | **30 000 cycles after light fastness** |
| | | | T: 1/1/1 | T: 0/0/0 |
| | | | TR: 1/1/1 | TR: 0/0/0 |

| | | | | |
|---|---|---|---|---|
| T - longitudinal; TR - latitudal; HR - relative humidity; IL - inferior limit; SL - superior limit | | | | |

In an embodiment, the incorporation of phthalate-free plasticizer does not impair the overall properties of the multi-layered material, since the phthalate-free based materials (Bioplasticizer - vegetable oil-based) present similar results to the reference material (standard phthalate) in the different characterization tests. Surprisingly, the incorporation of the phthalate-free plasticizer substantially favors the flammability characteristic since the phthalate-free based material decreases more than 20 mm/min in comparison with the standard material, as evaluated by the standard method FMVSS 302.

In a further embodiment, the incorporation of a phthalate-free plasticizer improved the flexing endurance of the material, as tested by ISO 32100:2018, presenting grades within the acceptable range (superior limit of 1) and lower as compared to the standard material, specially at cold conditions and even after a test of 50 000 cycles at - 20°C.

Flammability is a critical parameter for automotive interior trims. On the other hand, good mechanical properties are crucial to avoid cracks and material deformation, enhancing robustness and durability, namely in seat applications. Surprisingly, the flammability and flexing endurance results of the multi-layered material prepared with the phthalate-free bioplasticizer were higher than the results obtained for the control sample, i.e., sample with phthalate-based plasticizers (Table 2).

In an embodiment, the different plasticizers used to prepare the phthalate-free and the phthalate-containing materials showed different Hildebrand solubility parameters. The solubility of each plasticizer was obtained by Hildebrand solubility parameters, as listed in Table 3. An efficient plasticizer must interact strongly with the PVC. Generally, similar solubility parameters between PVC and plasticizer favours solubility/miscibility.

**Table 3: Embodiment of Hildebrand solubility parameters of the used plasticizers.**

| **Compound** | **(J.cm⁻³)^{1/2}** |
|---|---|
| Poly(vinyl chloride) (PVC) | 19.6 |
| Citrates | 15.3 |
| Ortho-phthalates (12>C>9) | 15.6 - 16.8 |
| Trimellitates (10>C>8) | 16.6-17.3 |
| Vegetable oil based (Castor oil derivatives) | 15.1-15.9 |
| Valeric acid ester C=4 | 16.2 |

**Table 4: Characterisation of the solubility of the phthalate-free plasticizer of the present disclosure and comparative examples (high molecular weight phthalate).**

| **Plasticizer** | **Solubility (J.cm⁻³)^{1/2}** |
|---|---|
| High molecular weight phatalate (HWP) with C=9 (comparative example) | 16.9 |
| High molecular weight phatalate (HWP) with C=10 (comparative example) | 16.8 |
| High molecular weight phatalate (HWP) with 12>C>10 (comparative example) | 15.6-16.6 |
| High molecular weight phatalate (HWP) with 11>C>9 (comparative example) | 16.5 |
| High molecular weight phatalate (HWP) with C=11 (comparative example) | 16.5 |
| Trimelitate with C=8 | 16.6 |
| Citric acid ester C=4 | 15.3 |
| Castor oil derivatives | 15.1-15.9 |
| Trimelitate with 9>C>7 | 17.3 |
| Valeric acid ester C=4 | 16.2 |

Figure 2 schematically represents another embodiment of the flexible multi-layered material, wherein the material comprises a plurality of PVC layers prepared with phthalate-free plasticizer, laid out on top of a support layer (such as a knitted fabric), wherein the support layer is bounded to the plurality of PVC layers by a PVC adhesive foam layer. The multi-layered material is then formed by the support layer, followed by a PVC adhesive foam layer, and then a second and first PVC compact layers. The first PVC layer maybe covered by a lacquer layer, as schematically represented in Figure 2.

In yet another embodiment, schematically represented in Figure 3, the flexible multi-layered material comprises a plurality of PVC layers with phthalate-free plasticizer, laid out on top of a support layer, wherein the support layer is bounded to the plurality of PVC layers by a PVC adhesive compact layer. The multi-layered material is then formed by the support layer, followed by the PVC adhesive compact layer, a PVC foam layer, and a compact PVC layer. The compact PVC layer may be covered by a lacquer layer, as schematically represented in Figure 3.

The term "comprising" whenever used in this document is intended to indicate the presence of stated features, integers, steps, components, but not to preclude the presence or addition of one or more other features, integers, steps, components or groups thereof.

Furthermore, where the claims recite a composition, it is to be understood that methods of using the composition for any of the purposes disclosed herein are included, and methods of making the composition according to any of the methods of making disclosed herein or other methods known in the art are included, unless otherwise indicated or unless it would be evident to one of ordinary skill in the art that a contradiction or inconsistency would arise.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. A flexible multi-layered material comprising:
a plurality of poly(vinyl chloride) - PVC - layers;
wherein at least one of the plurality of PVC layers is a foam layer;
wherein each of the layers of the plurality of PVC layers comprises up to 60% (w/w) of a phthalate-free plasticizer; and
wherein the phthalate-free plasticizer is selected from a list consisting of:
phosphate, trimelitate, adipate, citrate, sebacate, polyester, vegetable oil, or mixtures thereof; and
wherein the solubility of the phthalate-free plasticizer in the PVC is at least 13 (J.cm⁻³)^{1/2}.

2. The flexible multi-layered material according to the previous claim wherein the solubility of the phthalate-free plasticizer in the PVC is at least 14 (J.cm⁻³)^{1/2}; more preferably 15 (J.cm⁻³)^{1/2}.

3. The flexible multi-layered material according to any of the previous claims wherein the phthalate-free plasticizer is selected from a list consisting of citrate, trimelitate, vegetable oil or mixtures thereof; preferably trimelitate, vegetable oil or mixtures thereof.

4. The flexible multi-layered material according to any of the previous claims wherein the vegetable oil is a castor oil derivative.

5. The flexible multi-layered material according to any of the previous claims wherein the phthalate-free plasticizer is an acetylated form of triethyl citrate, castor oil derivative, or mixtures thereof.

6. The flexible multi-layered material according to any of the previous claims wherein the phthalate-free plasticizer is of biological origin.

7. The flexible multi-layered material according to any of the previous claims wherein at least one of the plurality of PVC layers is a compact PVC layer, preferably a PVC compact layer with a grammage that ranges from 200 to 400 g/m², preferably 250 to 350 g/m², and/or a density that ranges from 1100 to 1300 kg/m³.

8. The flexible multi-layered material according to any of the previous claims wherein the grammage of the PVC foam layer ranges from 120 to 350 g/m², preferably 140 to 185 g/m², and/or the density of the PVC foam layer ranges from 500 to 1050 kg/m³.

9. The flexible multi-layered material according to any of the previous claims further comprising an adhesive layer, a support layer, a lacquer layer, or combinations thereof, wherein the lacquer layer is an external layer over the plurality of PVC layers.

10. The flexible multi-layered material according to any of the previous claims wherein the support layer comprises textile, knitted fabric, spacer fabric, woven, natural fibers, or a combination of thereof.

11. The flexible multi-layered material according to any of the previous claims wherein the adhesive layer is a PVC adhesive foam layer.

12. The flexible multi-layered material according to any of the previous claims wherein the plurality of PVC layers comprises at least 60% (w/w) of PVC and up to 50% (w/w) of phthalate-free plasticizer; preferably 50-60% (w/w) of PVC and 40-50% (w/w) of phthalate-free plasticizer; more preferably up to 40% (w/w) of phthalate-free plasticizer.

13. The flexible multi-layered material according to any of the previous claims wherein the at least one of the plurality of PVC layers further comprises up to 10 % (w/w) of an additive, preferably an additive selected from a list comprising: pigments, stabilizers, filers, auxiliary substances, UV stabilizers, fire-retardants, or mixtures thereof.

14. The flexible multi-layered material according to any of the previous claims comprising:
a lacquer layer;
a plurality of PVC layers consisting of a PVC compact layer, a PVC foam layer, and
a PVC adhesive foam layer; and
a support layer selected from the following list: fabric, knitted fabric, nonwoven, foam, or mixtures thereof;
wherein each of the layers of the plurality of PVC layers comprises up to 60% (w/w) of a phthalate-free plasticizer selected from a list comprising: phosphate, trimelitate, adipate, citrate, sebacate, polyester, vegetable oil, or mixtures thereof, wherein the lacquer layer is deposited on top of the plurality of PVC layers and on the most outward face of the multi-layered material.

15. An article comprising a flexible multi-layered material as described in any one of the previous claims, preferably wherein said article is an upholstery article, or a seat, or door panel, or automotive interior trim.
